# EUROPÄISCHE PATENTSCHRIFT

(11) **EP 0 732 192 B1**
(45) Veröffentlichungstag und Bekanntmachung des Hinweises auf die Patenterteilung: **31.10.2001**
(21) Anmeldenummer: 96102234.0
(22) Anmeldetag: 15.02.1996
(51) Int. Cl.: B30B 1/26, B30B 15/04

(54) **Exzenterpresse, insbesondere zum mehrstufigen Kaltfliesspressen**
Eccenter driven press, in particular for multi-stage cold extrusion
Presse à excentrique, en particulier pour l'extrusion à froid en étapes multiples

(30) Priorität: 24.02.1995 DE 19506519
(43) Veröffentlichungstag der Anmeldung: 18.09.1996
(73) Patentinhaber: Schuler Pressen GmbH & Co. KG, 73033 Göppingen (DE)
(72) Erfinder: Braun, Rainer, D-73033 Göppingen (DE)

(56) Entgegenhaltungen:
- EP-A- 0 092 198
- FR-A- 2 291 855
- GB-A- 665 250
- GB-A- 1 524 716
- US-A- 1 801 024
- US-A- 2 366 272

## Beschreibung

Zur Herstellung von Werkstücken mittels Massivumformung werden häufig Umformpressen verwendet, die einen Rohling durch mehrere Werkzeugstufen takten und ihn so stufenweise zu dem gewünschten Werkstück umformen. Derartige Umformpressen werden als Exzenterpressen ausgeführt, die einen an einem Maschinenkörper linear verfahrbar gelagerten Stößel aufweisen, der über einen Exzenterantrieb permanent angetrieben ist, so daß er eine schwingende hin- und hergehende Bewegung ausführt. An dem Maschinenkörper sind außerdem mehrere Matrizen vertikal übereinander derart angeordnet, daß sich der Stößel mit seiner Stirnseite auf diese zu und von diesen weg bewegt. An der Stirnseite des Stößels sind den Matrizen zugeordnete Werkzeuge befestigt, wobei jedes Werkzeug mit der ihm jeweils zugeordneten Matrize eine Werkzeugstufe bildet.

Der Maschinenkörper weist zur Aufnahme des Stößels eine seitlich offene Ausnehmung auf, die von einer oberen und einer unteren Seitenwand begrenzt ist. Die Seitenwände sind miteinander einseitig über einen Schenkel des Maschinenkörpers verbunden.

Zur Lagerung des Stößels und um diesem eine hin- und hergehende Bewegung zu ermöglichen ist an jeder Seitenwand jeweils eine Gleitführung vorgesehen. Die Gleitführungen übertragen die von dem Stößel ausgehenden Kräfte auf den Maschinenkörper und leiten sie damit ab. Der Kraftfluß verläuft damit durch den Schenkel des Maschinenkörpers, der die Seitenwände in entsprechender Ausrichtung zueinander hält.

Zur Abdeckung der Ausnehmung und des darin laufenden Stößels ist ein Abdeckteil vorgesehen. Dieses ist abnehmbar, um Zugang zu den Gleitführungen zu ermöglichen. Diese müssen von Zeit zu Zeit gewartet werden, insbesondere müssen Sie bspw. von Abrieb gereinigt werden, der von den Matrizen oder den Werkstücken herrührt. Außerdem werden sie gelegentlich nachgestellt oder justiert.

Die Steifigkeit des Maschinenkörpers wird durch die Steifigkeit des die Seitenwänden miteinander verbindenden Schenkels begrenzt.

Aus der GB-A-665 250 ist eine Exzenterpresse mit Stößel sowie einer Linearführung zur Führung des Stößels bekannt.

Aus der DE 3904278 A1 ist eine mechanische Umformpresse bekannt, deren verschiebbar gelagerter Stößel in einem einseitig offenen Aufnahmeraum eines Maschinenkörpers angeordnet ist. Bei dieser Umformpresse weist der Maschinenkörper eine sich an den Aufnahmeraum anschließende taschenartige Verlängerung auf, die von dem Maschinenkörper fünfseitig umschlossen ist. In diesem Abschnitt des Aufnahmeraumes ist eine Exzenterwelle angeordnet, die über ein Pleuel mit dem Stößel verbunden ist. Der Stößel läuft in einem Abschnitt des Maschinenkörpers in entsprechenden, an dem Maschinenkörper abgestützen Führungen. Der Maschinenkörper umgibt den Stößel dreiseitig, so daß die von diesem in die entsprechenden Führungen eingeleiteten Kräfte von einem einzigen Abschnitt oder Schenkel des Maschinenkörpers aufgenommen werden müssen.

Die Steifigkeit des Maschinenkörpers, und damit die Steifigkeit des die Seitenwände verbindenden Schenkels ist begrenzt, so daß bei hohen dynamischen Belastungen mehr oder weniger große Ungenauigkeiten in der Führung des Stößels auftreten können, worunter die Genauigkeit bei der Bearbeitung der Werkstücke leiden kann.

Davon ausgehend ist es Aufgabe der Erfindung, eine Exzenterpresse zu schaffen, mit der sich eine hohe Bearbeitungsgenauigkeit beim Umformen von Werkstücken erreichen läßt.

Diese Aufgabe wird durch eine Exzenterpresse mit den Merkmalen des Patentanspruchs 1 gelöst.

Der mit Linearführungseinrichtungen an dem Maschinenkörper gelagerten Stößel taucht wenigstens teilweise in einen von dem Maschinenkörper gebildeten Aufnahmeraum ein, wobei er über die Linearführungseinrichtung den Stößel im Bereiche des Innenraums an dem Maschinenkörper lagert. Die Linearführungseinrichtung, üblicherweise zwei voneinander gesonderte Linearführungen, stützt sich dabei an dem den Stößel vierseitig umgebenden Maschinenkörper ab, der in diesem Bereich besonders steif ist. Der Maschinenkörper weist zwei im Abstand parallel zueinander angeordnete Schenkel auf, die durch eine obere und eine untere Seitenwand miteinander verbunden sind. Von dem Stößel ausgehende und über die Linearführungseinrichtung in den Maschinenkörper eingeleitete Kräfte können somit erheblich weniger zu einer Verformung des Maschinenkörpers beitragen, als es bei dem bekannten Maschinenkörper mit einseitig offenem Aufnahmeraum der Fall ist, die den Stößel lediglich dreiseitig umgeben.

Aufgrund der erhöhten Steifigkeit des Maschinenkörpers führen auch größere, von dem Stößel ausgehende und auf den Maschinenkörper einwirkende Kräfte zu einer lediglich geringen Deformation, so daß der Stößel selbst bei hohen Belastungen ausgesprochen präzise geführt wird. Damit werden auch die an seiner Stirnseite befestigten Werkzeuge in entsprechend präziser Ausrichtung zu den jeweiligen Matrizen geführt, so daß die Werkstücke mit hoher Genauigkeit bearbeitet werden. Darüberhinaus kann dadurch der Werkzeugverschleiß gesenkt werden.

Der geschlossene Maschinenkörper, der prinzipiell auch aus miteinander verschraubten oder anderweitig verbundenen Teilen bestehen kann, ist in dem als geschlossener Rahmen ausgebildeten Abschnitt vorzugsweise einstückig ausgebildet. Damit wird nicht nur eine hohe Steifigkeit, sondern darüberhinaus auch eine kostengünstige Fertigung erreicht.

Außerdem ist es vorteilhaft, wenn sich der als geschlossener Rahmen ausgebildete Abschnitt bezogen auf die Hubrichtung von wenigstens einer Position, die der Stößel mit seiner Stirnseite in der am weitesten zurückgezogenen Position einnimmt, bis über die Exzenterwelle hinaus erstreckt. Diese kann dann in dem als Rahmen ausgebildeten Abschnitt beidseits des Stößels gelagert werden, wodurch einen symmetrische Lagerbelastung und ein steifer Antrieb erhalten werden. In Verbindung mit der durchgehend ausgebildeten Seitenwand und dem durchgehend ausgebildeten Bodenabschnitt, die beide mit im wesentlichen unveränderter Wandstärke und Breite sowohl den als Rahmen ausgebildeten Abschnitt als auch den Arbeitsraum begrenzen, ergibt sich ein günstiger Kraftfluß, der auch bei hohen Belastungen nur zu geringen Deformationen führt. Der Maschinenkörper ist dann ein Block, der sowohl den Arbeitsraum als auch den Innenraum, in dem der Stößel läuft, umschließt und der lediglich im Bereich des Arbeitsraumes eine seitliche Öffnung aufweist.

Es hat sich als vorteilhaft erwiesen, als Führungseinrichtung zwei Wälzkörperführungen vorzusehen, die den Stößel beidseits führen. Die erste Wälzkörperführung ist vorzugsweise so angeordnet, daß sie den sich bspw. vertikal bewegenden Stößel trägt und lagert, während die zweite Wälzkörperführung lediglich dafür sorgt, daß der Stößel in einer durch beide Wälzkörperführungen definierten Ebene bleibt, und aus dieser nicht herausschwenken kann. Mit dieser Anordnung werden statische Überbestimmungen sicher vermieden.

Wälzkörperführungen sind auch in Folge ihrer Verschleißarmut vorteilhaft, die es ermöglicht, die betreffende Führung über lange Zeit zu betreiben, ohne daß irgendwelche Nachstellarbeiten erforderlich wären.

Als Wälzkörperführungen sind sowohl Führungen mit ebenen Laufflächen als auch Führungen anwendbar, bei denen die Führungsflächen gewölbt sind. Solches sind Führungen, bei denen eine Säule oder Welle in einer Führungsbüchse gelagert ist, die einen Käfig mit geeigneten Wälzkörpern enthält. Solche Wälzkörper können sowohl Kugeln als auch entsprechend geformte Satteltonnenrollen sein, die sowohl mit der Führungsbüchse als auch mit der Welle in Linienberührung stehen.

Die bspw. als Linearlagermittel dienenden Führungsbüchsen sind vorteilhafterweise in einem Abstand zueinander angeordnet und mit dem Maschinenkörper verbunden. Der Stößel trägt eine als Führungskörper dienende Welle, die durch beide Führungsbüchsen führt. Auf den Stößel einwirkende Kipp- oder Dehmomente werden von dem im Abstand zueinander stehenden Führungsbüchsen aufgenommen und problemlos an den Maschinenkörper weitergegeben. Anstelle der Zylinderbüchsen können auch andere Linearlagermittel verwendet werden, wobei dann als Führungskörper entsprechend geformte Schienen vorzusehen sind.

Die Exzenterpresse ist insbesondere als Mehrstufenpresse geeignet, die eine Anzahl in einer Reihe angeordneter Matrizen aufweist, denen an dem Stößel stirnseitig gehaltene Werkzeuge in entsprechender Zahl zugeordnet sind. Die Matrizen bilden mit den Werkzeugen eine Reihe von Werkzeugstufe, die auf einer geraden Linie angeordnet sind. Aus Symmetriegründen ist es anzustreben, daß diese Linie durch beide Linearführungen geht, so daß kein auf die zweite Wälzkörperführung einwirkendes seitliches Kippmoment entsteht. Der Maschinenkörper und die Linearführung sind jedoch durchaus in der Lage, solche außermittigen Belastungen ohne Überlastung aufnehmen.

In der Zeichnung ist ein Ausführungsbeispiel der Erfindung dargestellt. Es zeigen:
Fig. 1 die Exzenterpresse mit geschlossenem Maschinenkörper, in perspektivischer teilweise aufgebrochener und stark schematisierter Darstellung,
Fig. 2 die Exzenterpresse nach Fig. 1 im Querschnitt, in ausschnittsweiser, sowie schematisierter Darstellung und
Fig. 3 die Exzenterpresse nach Fig. 1 in einer ausschnittsweisen und teilweise geschnittenen Seitenansicht, in schematisierter Darstellung.

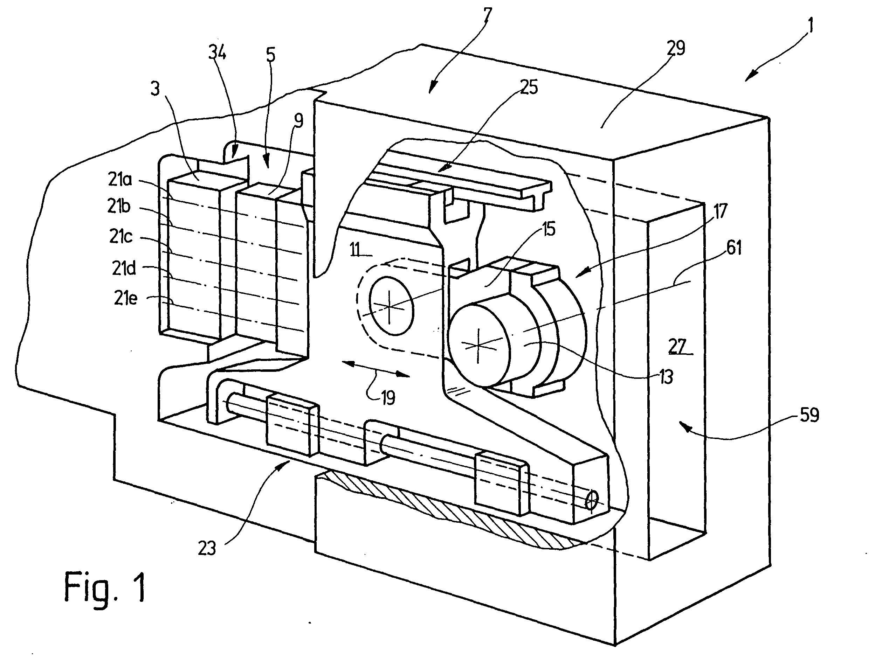

In Fig. 1 ist eine Exzenterpresse 1 dargestellt, wie sie insbesondere zum mehrstufigen Kaltfließpressen Verwendung findet. Die Exzenterpresse 1 weist dazu Matritzen 3 auf, die in einem Arbeitsraum 5 eines Maschinenkörpers 7 befestigt sind. Den Matritzen 3 sind Werkzeuge 9 zugeordnet, die stirnseitig an einem Stößel 11 gehalten sind. Der Stößel 11 wird durch eine von einer Exzenterwelle 13 und einem Pleuel 15 gebildete Antriebseinrichtung 17 in eine in Richtung des Pfeiles 19 hin und hergehende, schwingende Bewegung versetzt, wobei sich die Werkzeuge 9 auf die Matritzen 3 zu bewegen und von diesen entfernen.

Die Matritzen 3 bilden mit den Werkzeugen 5 insgesamt fünf Arbeits- oder Werkstückpositionen 21a, 21b, 21c, 21d, 21e, die in Fig. 1 lediglich schematisch durch strichpunktierte Linien angedeutet sind.

Zur Lagerung des Stößels 11 und zum Ableiten der auf den Stößel einwirkenden Kräfte in den Maschinenkörper 7 ist eine Linearführungseinrichtung vorgesehen, zu der eine erste, in Fig. 1 unterhalb des Stößels 11 angeordnete Wälzkörperführung 23 und eine zweite, in Fig. 1 oberhalb des Stößels 11 angeordnete Wälzkörperführung 25 gehören, auf die im einzelnen an späterer Stelle eingegangen wird.

Die Antriebseinrichtung 17 sowie die Wälzkörperführungen 23, 25 und der Stößel 11 sind wenigstens abschnittsweise in einem Innenraum 27 angeordnet, der von einem rahmenartigen, geschlossenen Abschnitt 29 des Maschinenkörpers 7 vierseitig umschlossen ist. Der Arbeitsraum 5 schließt sich an den Innenraum 27 an, bei dem der Maschinenkörper 7 einstückig ausgebildet ist.

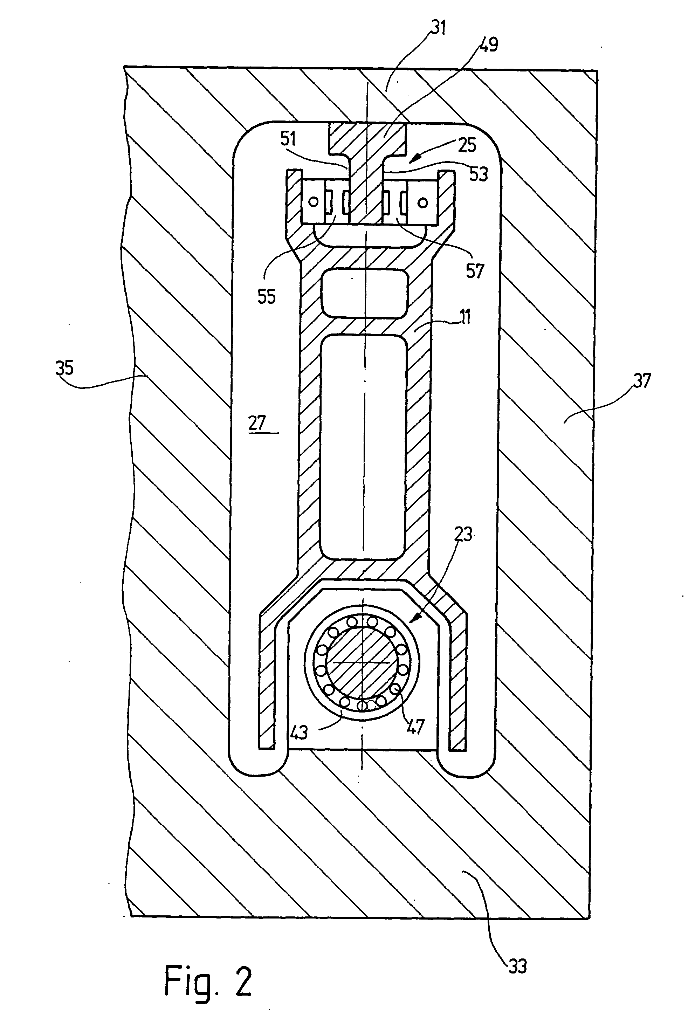

Wie aus Fig. 2 hervorgeht, wird der Innenraum 27 von einer oberen Seitenwand 31 und einem eine untere Seitenwand bildenden Bodenabschnitt 33 begrenzt, die im Abstand parallel zueinander angeordnet sind und die durch einen ersten, in Fig. 2 linksseitig dargestellten Schenkel 35 und einen im Abstand parallel zu diesem angeordneten, rechtsseitigen Schenkel 37 untereinander verbunden sind. Der aus den Schenkeln 35, 37 sowie der oberen Seitenwand 31 und dem Bodenabschnitt 33 gebildete Rahmen ist einstückiger Bestandteil des Maschinenkörpers 7, und er erweist sich als ausgesprochen verwindungssteif. Die obere Seitenwand 31 erstreckt sich mit unverminderter Breite und Dicke sowohl durch den Innenraum 27 als auch durch den Arbeitsraum 5 bis zu seiner Stirnwand 34, an der in einer Ausnehmung die Matritzen 3 aufgenommen und abgestützt sind. Der Bodenabschnitt 33 erstreckt sich ebenfalls sowohl durch den Innenraum 27 als auch durch den Arbeitsraum 5 bis zu der Stirnwand.

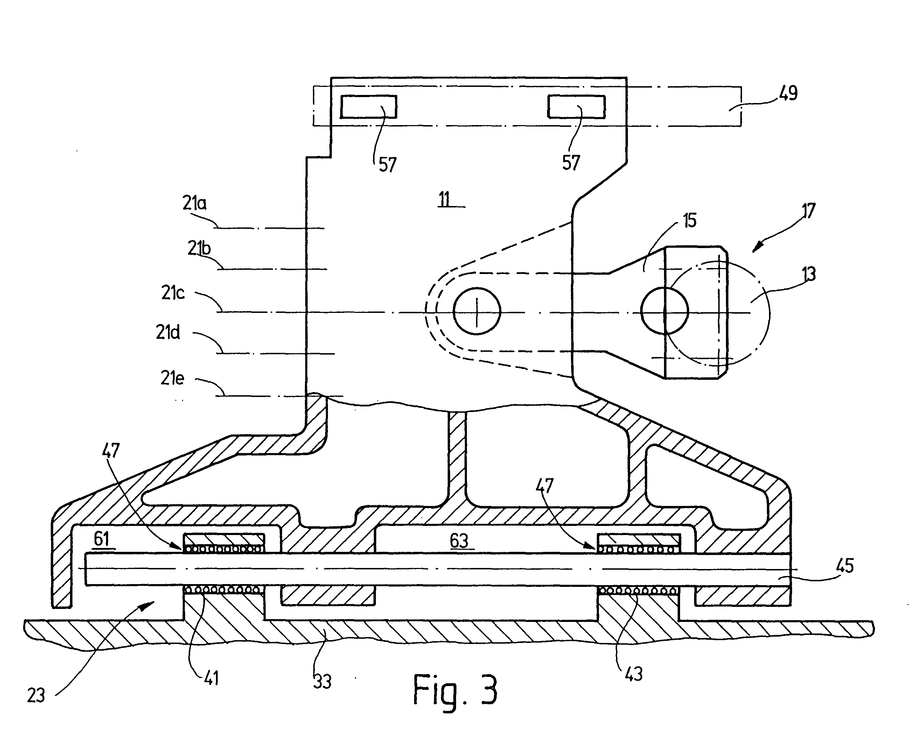

Wie die Fign. 2 und 3 zeigen, dienen als Wälzkörperführung 23 zwei im Abstand fluchtend zueinander an dem Bodenabschnitt 33 gelagerte Wälzkörperbüchsen 41, 43, in denen eine an dem Stößel 11 befestigte Säule oder Welle 45 längsverschiebbar gelagert ist. Zwischen der Welle 45 und der jeweiligen Wälzkörperbüchse 41, 43 sind Wälzkörper angeordnet, die, wie in den Fign. dargestellt, Kugeln 47 sein können. Um eine bessere Belastbarkeit und Tragfähigkeit zu erhalten, können jedoch auch Satteltonnenrollen verwendet werden, die sowohl mit der jeweiligen Wälzkörperbüchse 41, 43 als auch mit der Welle 45 in Linienberührung stehen.

Die mit der oberen Seitenwand 31 verbundene Wälzkörperführung 25 weist als Führungskörper eine mit der oberen Seitenwand 31 verbundene Schiene 49 auf, die mit zwei voneinander weg weisenden, im Abstand parallel zueinander angeordneten Laufflächen 51, 53 versehen ist. Zur Lagerung des Stößels 11 an der Schiene 49 sind Walzenumlaufschuhe 55, 57 vorgesehen.

Während sich die Laufschiene 49 mit ihrer gesamten Länge in dem von dem Abschnitt 29 des Maschinenkörpers 7 umschlossenen Innenraum 27 befindet, übersteigt die Länge der Welle 45, die zu der Wälzkörperführung 23 gehört, die Länge des Innenraumes 27 und erstreckt sich bis in den Arbeitsraum 5. Die Wälzkörperbüchsen 41, 43 sind in entsprechend weitem Abstand zueinander angeordnet, so daß auf den Stößel 11 einwirkende Dreh- oder Kippmomente sicher und ohne ein Verkippen des Stößels 11 zu verursachen, in den Maschinenkörper 7 abgeleitet werden. Dabei ist die Wälzkörperbüchse 41 in unmittelbarer Nachbarschaft des Abschnittes 29 des Maschinenkörpers 7 an dem Bodenabschnitt 33 gehalten, so daß Kräfte auf kurzem Wege in den Abschnitt 29 eingeleitet werden.

Der Abschnitt 29 des Maschinenkörpers 7 ist von seiner in Richtung des Pfeiles 19 gemessenen Länge her derart bemessen, daß nicht nur der weitaus größte Teil des Stößels 11 sondern auch die Antriebseinrichtung 17 in dem Innenraum 27 Platz finden. Die Exzenterwelle 13 durchsetzt den Innenraum 27 und ist sowohl an dem Schenkel 35 als auch an dem Schenkel 37 drehbar gelagert. Damit ergibt sich ein beim Arbeiten der Exzenterpresse 1 auftretender Kraftfluß von den Matritzen 3 zu den entsprechenden Lagerstellen der Exzenterwelle 13, der durch beide Schenkel 35, 37 geht, womit dynamische Verbiegungen des Maschinenkörpers 7 weitestgehend, d.h. auf ein äußerst geringes Maß, reduziert sind.

Die insoweit beschriebene Exzenterpresse arbeitet wie folgt:

Im Betrieb läuft die Exzenterwelle 13 mit nahezu konstanter Drehzahl um eine in Fig. 1 mit 61 bezeichnete Drehachse um, wodurch der Stößel eine in Richtung des Pfeiles 19 hin und hergehende Bewegung ausführt. In einem durch die Bewegung des Stößels 11 vorgegebenen Takt wird, immer wenn dieser in seiner weitest zurückgezogenen Position steht, d.h. immer dann, wenn die Werkzeuge 9 am weitesten von den Matritzen 3 entfernt sind, ein Rohling in die Werkzeugstufe 21a eingesetzt, wobei zuvor der in dieser Stufe befindliche umgeformte Rohling in die nächste Werkzeugstufe 21b weitertransportiert wird. Dazu dient eine nicht weiter dargestellte Transporteinrichtung. Auf diese Weise werden die Rohlinge nacheinander, ausgehend von der Werkzeugstufe 21a, durch alle Werkzeugstufen bis zu der Werkzeugstufe 21c durchgetaktet, wo das fertig umgeformte Werkstück entnommen wird.

Die in den Werkzeugstufen 21a, 21b, 21c, 21d und 21e erfolgenden Umformvorgänge sind unterschiedlich und erfordern damit jeweils unterschiedliche Kräfte. In der Folge entstehen dynamische, auf den Stößel 11 einwirkende Kippmomente, die von der Wälzkörperführung 23 an den Bodenabschnitt 33 des Maschinenkörpers 7 abgeleitet werden. Außerdem entstehen an den Lagerungen der Exzenterwelle 13 Lagerreaktionen, die von den Preßkräften bestimmt werden, die das Werkzeug 9 aufbringen muß. Diese Lagerreaktionen werden im wesentlichen symmetrisch in die Schenkel 35, 37 des rahmenförmigen Abschnittes 29 des Maschinenkörpers eingeleitet und somit aufgenommen.

Die Exzenterpresse mit um den Stößel 11 und die Antriebseinrichtung 17 rahmenförmig geschlossenem Maschinenkörper 7 führt den Stößel 11 wegen der symmetrischen Kräfteausleitung aus der Antriebseinrichtung und aus den Wälzkörperführungen 23, 25 ausgesprochen präzise, so daß sowohl die Genauigkeit der in den Werkzeugstufen 21a bis 21e umgeformten Werkstücke erhöht, als auch der Werkzeugverbrauch reduziert werden kann. Darüber hinaus ist die Anzahl der Teile reduziert, so daß der Maschinenkörper 7 kostengünstig gefertigt werden kann. Außerdem kann bei der Linearführungseinrichtung insbesondere bei der Wälzkörperführung 23 auf Normteile zurückgegriffen werden, was die Herstellungskosten senkt.

Die Wälzkörperführungen 23, 25 sind außerdem im wesentlichen wartungsfrei, insbesondere braucht die Wälzkörperführung 23 weder nachjustiert, noch bei der Montage eingestellt zu werden. Ein Zugriff auf in dem Innenraum 27 des Maschinenkörpers 7 angeordneten Abschnitte der Welle 45 und die Wälzkörperbüchse 43 ist nicht erforderlich. Deshalb ist der Abschnitt 29 des Maschinenkörpers 7 unterbrechungsfrei, d.h. ohne größere, einen Zugriff ermöglichende Wartungsöffnungen geschlossen. Bis auf die zur Lagerung der Exzenterwelle 13 erforderlichen Lagerungen sind die Schenkel 35, 37 somit über ihre gesamte, von dem Arbeitsraum 5 bis über die Exzenterwelle 13 wegreichende Länge durchgehend ausgebildet. Lediglich zur Montage der Antriebseinrichtung 17 und des Stößels 11 mit seinen Wälzkörperführungen 23, 25 ist an dem Maschinenkörper 7 endseitig eine in den Innenraum 27 führende Öffnung 59 vorgesehen.

Die im einzelnen aus Fig. 3 ersichtliche Anordnung der Welle 45 und der Wälzkörperbüchsen 41, 43 in jeweiligen, an dem Stößel 11 an seine Unterseite vorgesehenen Aufnahmeräumen 61, 63 schützt die Wälzkörperführung 23 vor Kühlmitteln, Abrieb der Werkzeuge, der Matritzen oder der Werkstücke, sowie vor anderweitigen Verunreinigungen. Damit wird sichergestellt, daß die Wälzkörperführung 23 auf Dauer problemlos läuft.

Insbesondere wird durch die beschriebene, geschlossene Ausführung des Maschinenkörpers 7 eine steife Führung des Stößels 11 erreicht, die durch die Wälzkörperführung 23 noch unterstützt wird, insbesondere, wenn diese als Wälzkörper Satteltonnen aufweist.

Bei einer Exzenterpresse zum mehrstufigen Massivumformen ist ein über eine Exzenterwelle und ein Pleuel angetriebener Stößel an einem Maschinenkörper linear verschiebbar gelagert. Der Maschinenkörper ist im Bereich des Stößels und der Exzenterwelle rahmenförmig geschlossen, so daß er den Stößel vierseitig umschließt. Der Maschinenkörper bildet einen Innenraum, durch den die Exzenterwelle führt, die zu beiden Seiten des Innenraumes gelagert ist. Ein derartig ausgebildeter Maschinenkörper ist ausgesprochen steif und widersteht insbesondere höheren dynamischen Belastungen problemlos.

Bei einer Exzenterpresse zum mehrstufigen Massivumformen ist ein über eine Exzenterwelle 13 und ein Pleuel 15 angetriebener Stößel 11 an einem Maschinenkörper 7 linear verschiebbar gelagert. Der Maschinenkörper 7 ist im Bereich des Stößels 11 und der Exzenterwelle 13 rahmenförmig geschlossen, so daß er den Stößel 11 vierseitig umschließt. Der Maschinenkörper 7 bildet einen Innenraum 27, durch den die Exzenterwelle 13 führt, die zu beiden Seiten des Innenraumes 27 gelagert ist. Ein derartig ausgebildeter Maschinenkörper 7 ist ausgesprochen steif und widersteht insbesondere höheren dynamischen Belastungen problemlos.

## Patentansprüche

1. Exzenterpresse, insbesondere zum mehrstufigen Massivumformen,
mit einem Maschinenkörper (7), der einen Abschnitt (29) aufweist, der als geschlossener Rahmen einen Innenraum (27) wenigstens vierseitig umgrenzt,
mit einem Stößel (11), der wenigstens teilweise in dem Innenraum (27) angeordnet und in einer Hubrichtung (19) verschiebbar gelagert ist,
mit einer Linearführungseinrichtung zur Führung des Stößels (11) auf einer geraden Bahn, wobei die Linearführungseinrichtung wenigstens teilweise in dem Innenraum (27) angeordnet und an dem Abschnitt (29) des Maschinenkörpers (7) gehalten ist,
mit einem Arbeitsraum (5), der wenigstens teilweise von dem Maschinenkörper (7) umgrenzt ist, wobei der Innenraum (27) in den Arbeitsraum (5) mündet, in dem wenigstens eine Matritze (3) angeordnet ist,
mit wenigstens einem Werkzeug (9), das stirnseitig an dem Stößel (11) angeordnet ist und durch diesen auf die wenigstens eine Matritze (3) zu und von dieser weg bewegt wird,
mit einer Exzenterwelle (13), die durch den als Rahmen ausgebildeten Abschnitt (29) des Maschinenkörpers (7) führend angeordnet ist, die mit dem Stößel (11) verbunden ist und über die der Stößel (11) in einer hin- und hergehenden Hubbewegung angetrieben ist, wobei der Maschinenkörper (7) in dem als geschlossenen Rahmen ausgebildeten Abschnitt (29) einstückig ausgebildet ist.

2. Exzenterpresse, insbesondere zum mehrstufigen Massivumformen,
mit einem Maschinenkörper (7), der einen Abschnitt (29) aufweist, der als geschlossener Rahmen einen Innenraum (27) wenigstens vierseitig umgrenzt,
mit einem Stößel (11), der wenigstens teilweise in dem Innenraum (27) angeordnet und in einer Hubrichtung (19) verschiebbar gelagert ist,
mit einer Linearführungseinrichtung zur Führung des Stößels (11) auf einer geraden Bahn, wobei die Linearführungseinrichtung wenigstens teilweise in dem Innenraum (27) angeordnet und an dem Abschnitt (29) des Maschinenkörpers (7) gehalten ist,
mit einem Arbeitsraum (5), der wenigstens teilweise von dem Maschinenkörper (7) umgrenzt ist, wobei der Innenraum (27) in den Arbeitsraum (5) mündet, in dem wenigstens eine Matritze (3) angeordnet ist,
mit wenigstens einem Werkzeug (9), das stirnseitig an dem Stößel (11) angeordnet ist und durch diesen auf die wenigstens eine Matritze (3) zu und von dieser weg bewegt wird,
mit einer Exzenterwelle (13), die durch den als Rahmen ausgebildeten Abschnitt (29) des Maschinenkörpers (7) führend angeordnet ist, die mit dem Stößel (11) verbunden ist und über die der Stößel (11) in einer hin- und hergehenden Hubbewegung angetrieben ist, wobei der den Arbeitsraum (5) begrenzende Maschinenkörper (7) und der als geschlossener Rahmen ausgebildete Abschnitt (29) des Maschinenkörpers (7) miteinander einstückig ausgebildet sind.

3. Exzenterpresse nach Anspruch 1, **dadurch gekennzeichnet, daß** der Arbeitsraum (5) und der als geschlossener Rahmen ausgebildete Abschnitt (29) des Maschinenkörpers (7) eine obere Seitenwand (31) und einen Bodenabschnitt (33) aufweisen, die mit im wesentlichen konstanter Wandstärke und Breite sowohl den Arbeitsraum (5) als auch den Innenraum (27) begrenzen.

4. Exzenterpresse nach Anspruch 1, **dadurch gekennzeichnet, daß** sich der als geschlossener Rahmen ausgebildete Abschnitt (29) bezogen auf die Hubrichtung (19) wenigstens von einer Stelle, die das Werkzeug (9) in seiner von der Matritze (3) am weitesten entfernten Stellung einnimmt, bis über die Exzenterwelle (13) hinaus erstreckt, die beidseits eines Pleuels (15), über das sie mit dem Stößel (11) verbunden ist, an dem als Rahmen ausgebildeten Abschnitt (23) des Maschinenkörpers (7) gelagert ist.

5. Exzenterpresse nach Anspruch 1, **dadurch gekennzeichnet, daß** die Linearführungseinrichtung eine erste Wälzkörperführung (23) aufweist, über die der Stößel (11) mit dem Maschinenkörper (7) verbunden ist.

6. Exzenterpresse nach Anspruch 6, **dadurch gekennzeichnet, daß** die Wälzkörperführung (23) ein erstes Linearlagermittel (41) und ein im Abstand zu diesem angeordnetes zweites Linearlagermittel (43) aufweist, das in dem Innenraum (27) angeordnet ist, wobei die Linearlagermittel (41, 43) eine gemeinsame Lagerachse definieren, und daß die Wälzkörperführung (23) wenigstens einen Führungskörper (45) aufweist, der an dem jeweiligen Linearlagermittel (41, 43) längsverschiebbar gelagert ist.

7. Exzenterpresse nach Anspruch 7, **dadurch gekennzeichnet, daß** die Wälzkörperführung (23) lediglich einen einzigen Führungskörper (45) aufweist, der sowohl an dem ersten Linearlagermittel (41) als auch an dem zweiten Linearlagermittel (43) gelagert ist.

8. Exzenterpresse nach Anspruch 7, **dadurch gekennzeichnet, daß** die Linearlagermittel (41, 43) der Wälzkörperführung (23) mit dem Maschinenkörper (7) verbunden sind.

9. Exzenterpresse nach Anspruch 8, **dadurch gekennzeichnet, daß** der Führungskörper (45) der Wälzkörperführung (23) mit dem Stößel (11) verbunden ist.

10. Exzenterpresse nach Anspruch 8, **dadurch gekennzeichnet, daß** der Führungskörper (45) eine Welle und die Linearlagermittel (41, 43) Zylinderbüchsen sind, in denen Wälzkörper (47) in entsprechenden Käfigen gehalten sind.

11. Exzenterpresse nach Anspruch 1, **dadurch gekennzeichnet, daß** die Linearführungseinrichtung (23) in entsprechenden, an dem Stößel (11) vorgesehenen Aufnahmeräumen (61, 63) angeordnet ist.

12. Exzenterpresse nach Anspruch 6, **dadurch gekennzeichnet, daß** die Linearführungseinrichtung zur Führung des Stößels (11) auf seiner geraden Bahn eine zweite Wälzkörperführung (25) aufweist, die im Abstand parallel zu der ersten Wälzkörperführung (23) vollständig in dem Innenraum (27) angeordnet ist.

13. Exzenterpresse nach Anspruch 13, **dadurch gekennzeichnet, daß** die zweite Wälzkörperführung (25) den Stößel (11) ausschließlich in seiner Ausrichtung auf den Maschinenkörper (7) bezüglich einer Schwenkbewegung um die erste Wälzkörperführung (23) lagert.

## Claims

1. Eccentric press, in particular for multistage massive forming,
with a machine body (7), which has a portion (29) which, as a closed frame, encloses an inner space (27) on at least four sides,
with a slide (11), which is arranged at least partly in the inner space (27) and is mounted such that it can be displaced in a reciprocating direction (19),
with a linear guiding device for guiding the slide (11) on a straight path, the linear guiding device being arranged at least partly in the inner space (27) and being held on the portion (29) of the machine body (7),
with a working space (5), which is at least partly enclosed by the machine body (7), the inner space (27) opening out into the working space (5), in which at least one die plate (3) is arranged,
with at least one die (9), which is arranged at the extreme end of the slide (11) and is moved by the latter towards and away from the at least one die plate (3),
with an eccentric shaft (13), which is arranged such that it leads through the portion (29) of the machine body (7) which is designed as a frame, is connected to the slide (11) and by means of which the slide (11) is moved in a back and forth reciprocating movement, the machine body (7) being formed in one piece in the portion (29) designed as a closed frame.

2. Eccentric press, in particular for multistage massive forming,
with a machine body (7), which has a portion (29) which, as a closed frame, encloses an inner space (27) on at least four sides,
with a slide (11), which is arranged at least partly in the inner space (27) and is mounted such that it can be displaced in a reciprocating direction (19),
with a linear guiding device for guiding the slide (11) on a straight path, the linear guiding device being arranged at least partly in the inner space (27) and being held on the portion (29) of the machine body (7),
with a working space (5), which is at least partly enclosed by the machine body (7), the inner space (27) opening out into the working space (5), in which at least one die plate (3) is arranged,
with at least one die (9), which is arranged at the extreme end of the slide (11) and is moved by the latter towards and away from the at least one die plate (3),
with an eccentric shaft (13), which is arranged such that it leads through the portion (29) of the machine body (7) which is designed as a frame, is connected to the slide (11) and by means of which the slide (11) is moved in a back and forth reciprocating movement, the machine body (7) which bounds the working space (5) and the portion (29) of the machine body (7) which is designed as a closed frame being formed together in one piece.

3. Eccentric press according to Claim 1, **characterized in that** the working space (5) and the portion (29) of the machine body (7) which is designed as a closed frame have an upper side wall (31) and a bottom portion (33), which bound both the working space (5) and the inner space (27) with a substantially constant wall thickness and width.

4. Eccentric press according to Claim 1, **characterized in that** the portion (29) which is designed as a closed frame extends with respect to the reciprocating direction (19) at least from a point which the die (9) assumes in its position furthest away from the die plate (3) to beyond the eccentric shaft (13), which is mounted on both sides of a connecting rod (15), via which it is connected to the slide (11), on the portion (23) of the machine body (7) which is designed as a frame.

5. Eccentric press according to Claim 1, **characterized in that** the linear guiding device has a first rolling body guide (23), by means of which the slide (11) is connected to the machine body (7).

6. Eccentric press according to Claim 6, **characterized in that** the rolling body guide (23) has a first linear bearing means (41) and a second linear bearing means (43), which is arranged at a distance from the said first linear bearing means and is arranged in the inner space (27), the linear bearing means (41, 43) defining a common bearing axis, and **in that** the rolling body guide (23) has at least one guiding body (45), which is mounted such that it can be longitudinally displaced on the respective linear bearing means (41, 43).

7. Eccentric press according to Claim 7, **characterized in that** the rolling body guide (23) has only a single guiding body (45), which is mounted both on the first linear bearing means (41) and on the second linear bearing means (43).

8. Eccentric press according to Claim 7, **characterized in that** the linear bearing means (41, 43) of the rolling body guide (23) are connected to the machine body (7).

9. Eccentric press according to Claim 8, **characterized in that** the guiding body (45) of the rolling body guide (23) is connected to the slide (11).

10. Eccentric press according to Claim 8, **characterized in that** the guiding body (45) is a shaft and the linear bearing means (41, 43) are cylinder liners, in which rolling bodies (47) are held in corresponding cages.

11. Eccentric press according to Claim 1, **characterized in that** the linear guiding device (23) is arranged in corresponding receiving spaces (61, 63) provided on the slide (11).

12. Eccentric press according to Claim 6, **characterized in that** the linear guiding device has for guiding the slide (11) on its straight path a second rolling body guide (25), which is arranged completely in the inner space (27) at a distance from and parallel to the first rolling body guide (23).

13. Eccentric press according to Claim 13,
**characterized in that** the second rolling body guide (25) mounts the slide (11) exclusively in its alignment on the machine body (7) with respect to a pivoting movement about the first rolling body guide (23).

## Revendications

1. Presse à excentrique, notamment pour le formage à plusieurs étages, comprenant :
un corps de machine (7) qui comporte une partie (29) en forme de cadre fermé qui entoure un espace intérieur (27) sur au moins quatre côtés,
un coulisseau (11) qui est disposé au moins partiellement dans l'espace intérieur (27) et qui est monté pour coulisser dans une direction de course (19),
un dispositif de guidage linéaire destiné à guider le coulisseau (11) sur une trajectoire rectiligne, dans lequel le dispositif de guidage linéaire est disposé au moins partiellement dans l'espace intérieur (27) et est tenu à la partie (29) du corps de machine (7),
un espace de travail (5) qui est limité au moins partiellement par le corps de machine (7), dans lequel l'espace intérieur (27) débouche dans l'espace de travail (5) où est disposée au moins une matrice (3),
au moins un outil (9) qui est disposé en position frontale sur le coulisseau (11) et est mis en mouvement par ce dernier dans le sens qui le rapproche et dans le sens qui l'éloigne de la au moins une matrice (3),
un arbre à excentrique (13) qui est disposé en passant à travers la partie formant cadre (29) du corps de machine (7), qui est lié au coulisseau (11) et par l'intermédiaire duquel le coulisseau (11) est entraîné en un mouvement de course alternatif, le corps de machine (7) étant formé en une seule pièce dans la partie (29) en forme de cadre fermé.

2. Presse à excentrique, notamment pour le formage à plusieurs étages, comprenant :
un corps de machine (7) qui comporte une partie (29) en forme de cadre fermé qui entoure un espace intérieur (27) sur au moins quatre côtés,
un coulisseau (11) qui est disposé au moins partiellement dans l'espace intérieur (27) et qui est monté pour coulisser dans une direction de course (19),
un dispositif de guidage linéaire destiné à guider le coulisseau (11) sur une trajectoire rectiligne, dans lequel le dispositif de guidage linéaire est disposé au moins partiellement dans l'espace intérieur (27) et est tenu à la partie (29) du corps de machine (7),
un espace de travail (5) qui est limité au moins partiellement par le corps de machine (7), dans lequel l'espace intérieur (27) débouche dans l'espace de travail (5) où est disposée au moins une matrice (3),
au moins un outil (9) qui est disposé en position frontale sur le coulisseau (11) et est mis en mouvement par ce dernier dans le sens qui le rapproche et dans le sens qui l'éloigne de la au moins une matrice (3),
un arbre à excentrique (13) qui est disposé en passant à travers la partie formant cadre (29) du corps de machine (7), qui est liée au coulisseau (11) et par l'intermédiaire duquel le coulisseau (11) est entraîné en un mouvement de course alternatif, le corps de machine (7) qui délimite l'espace de travail (5) et la partie (29) en forme de cadre fermé du corps de machine (7) étant formés en une seule pièce l'un avec l'autre.

3. Presse à excentrique selon la revendication 1, **caractérisée en ce que** l'espace de travail (5) et la partie (29) en forme de cadre fermé du corps de machine (7) comportent une paroi latérale supérieure (31) et une partie de plancher (33), qui délimitent aussi bien l'espace de travail (5) que l'espace intérieur (27), avec une épaisseur de paroi et une largeur sensiblement constantes.

4. Presse à excentrique selon la revendication 1, **caractérisée en ce que** la partie (29) en forme de cadre fermé s'étend, dans la direction de course (19), au moins d'une zone que l'outil (9) occupe dans sa position la plus éloignée de la matrice (3), jusque au-delà de l'arbre à excentrique (13) qui est tourillonné dans la partie (29) en forme de cadre du corps de machine (7) de part et d'autre d'une bielle (15) par l'intermédiaire de laquelle elle est reliée au coulisseau (11).

5. Presse à excentrique selon la revendication 1, **caractérisée en ce que** le dispositif de guidage linéaire comporte un premier guidage à corps roulants (23) par l'intermédiaire duquel le coulisseau (11) est relié au corps de machine (7).

6. Presse à excentrique selon la revendication 6, **caractérisée en ce que** le guidage à corps roulants (23) comporte un premier moyen de portée linéaire (41) et un deuxième moyen de portée linéaire (43) disposé dans l'espace intérieur (27) à distance du premier, les moyens de portée linéaire (41, 43) définissant un axe de portée commun, et le guidage à corps roulants (23) comportant au moins un corps de guidage (45) qui est monté mobile en translation longitudinale sur le moyen de portée linéaire respectif (41, 43).

7. Presse à excentrique selon la revendication 7, **caractérisée en ce que** le guidage à corps roulants (23) comporte un corps de guidage (45) unique qui est monté aussi bien dans le premier moyen de portée linéaire (41) que dans le deuxième moyen de portée linéaire (43).

8. Presse à excentrique selon la revendication 7, **caractérisée en ce que** les moyens de portée linéaires (41, 43) du guidage à corps roulants (23) sont solidaires du corps de machine (7).

9. Presse à excentrique selon la revendication 8, **caractérisée en ce que** le corps de guidage (45) du guidage à corps roulants (23) est solidaire du coulisseau (11).

10. Presse à excentrique selon la revendication 8, **caractérisée en ce que** le corps de guidage (45) est un arbre et les moyens de portée linéaires (41, 43) sont des douilles cylindriques à l'intérieur desquelles des corps roulants (47) sont tenus dans des cages correspondantes.

11. Presse à excentrique selon la revendication 1, **caractérisée en ce que** le dispositif de guidage linéaire (23) est disposé dans des logements (61, 63) correspondants prévus sur le coulisseau (11).

12. Presse à excentrique selon la revendication 6, **caractérisée en ce que** le dispositif de guidage linéaire destiné à guider le coulisseau (11) comporte sur sa trajectoire rectiligne un deuxième guidage à corps roulants (25) qui est disposé à distance du premier guidage à corps roulants (23) et parallèlement à ce dernier, entièrement dans l'espace intérieur (27).

13. Presse à excentrique selon la revendication 13, **caractérisée en ce que** le deuxième guidage à corps roulants (25) supporte le coulisseau (11) exclusivement dans son orientation sur le corps de machine (7) en mouvement de pivotement autour du premier guidage à corps roulants (23).
